# EUROPEAN PATENT SPECIFICATION

(11) **EP 3 099 026 B1**
(45) Date of publication and mention of the grant of the patent: **24.10.2018**
(21) Application number: 14887993.5
(22) Date of filing: 04.04.2014
(51) Int. Cl.: H04L 12/775, H04L 12/721, H04L 12/715, H04L 12/741

(54) **IN-NETWORK MESSAGE PROCESSING METHOD, IN-NETWORK MESSAGE FORWARDING EQUIPMENT AND IN-NETWORK MESSAGE PROCESSING SYSTEM**
NETZINTERNES NACHRICHTENVERARBEITUNGSVERFAHREN, NETZINTERNE NACHRICHTENWEITERLEITUNGSVORRICHTUNG UND NETZINTERNES NACHRICHTENVERARBEITUNGSSYSTEM
PROCÉDÉ DE TRAITEMENT DE MESSAGE DANS UN RÉSEAU, ÉQUIPEMENT DE TRANSFERT DE MESSAGE DANS UN RÉSEAU ET SYSTÈME DE TRAITEMENT DE MESSAGE DANS UN RÉSEAU

(43) Date of publication of application: 30.11.2016
(73) Proprietor: Huawei Technologies Co., Ltd., Longgang District Shenzhen, Guangdong 518129 (CN)
(72) Inventor: WANG, Wenming, Shenzhen Guangdong 518129 (CN); LI, Zhiqiang, Shenzhen Guangdong 518129 (CN); LUO, Yong, Shenzhen Guangdong 518129 (CN); LI, Hongyu, Shenzhen Guangdong 518129 (CN)
(74) Representative: Gill Jennings & Every LLP
(86) International application number: PCT/CN2014/074782
(87) International publication number: WO 2015/149343

(56) References cited:
- WO-A1-2012/174980
- CN-A- 102 710 529
- CN-A- 102 843 286
- CN-A- 102 946 354
- CN-A- 103 166 874
- US-A1- 2012 284 712
- SKOLDSTROM PONTUS ET AL: "Implementation and Evaluation of a Carrier-Grade OpenFlow Virtualization Scheme", 2013 SECOND EUROPEAN WORKSHOP ON SOFTWARE DEFINED NETWORKS, IEEE, 10 October 2013 (2013-10-10), pages 75-80, XP032529479, DOI: 10.1109/EWSDN.2013.19 [retrieved on 2013-12-09]
- "SPARC ICT-258457 Split Architecture for Large Scale Wide Area Networks. Deliverable D3.3", , 1 December 2011 (2011-12-01), XP055139597, Retrieved from the Internet: URL:http://www.fp7-sparc.eu/assets/deliver ables/SPARC_D3.3_Split_Architecture_for_La rge_Scale_Wide_Area_Networks.pdf [retrieved on 2014-09-11]
- PONTUS SKOLDSTROM ET AL: "Network virtualization and resource allocation in OpenFlow-based wide area networks", COMMUNICATIONS (ICC), 2012 IEEE INTERNATIONAL CONFERENCE ON, IEEE, 10 June 2012 (2012-06-10), pages 6622-6626, XP032274678, DOI: 10.1109/ICC.2012.6364857 ISBN: 978-1-4577-2052-9

## Description

### TECHNICAL FIELD

The present invention relates to the field of information technologies, and specifically, to a method for processing a packet in a network, a forwarding device, and a packet processing system.

### BACKGROUND

OpenFlow (OpenFlow)/software-defined networking (Software-Defined Networking, SDN) is a new network architecture defined by the Open Network Foundation (Open Network Foundation, ONF), aiming at redefining network computation by using an architecture and a method in the field of personal computer (Personal Computer, PC) computation. A forwarding plane is considered as a central processing unit (Central Processing Unit, CPU) executing an instruction, and a control plane is considered as an centralized network operating system. The network computation is implemented by programming on the network operating system.

As there is a concept of a virtual machine in the field of PC computation, a concept of network virtualization is also proposed in the field of network computation, aiming at virtualizing a physical forwarding plane resource into multiple virtual forwarding planes, where multiple control planes may respectively control these virtual forwarding planes to perform network forwarding.

In an OpenFlow/SDN forwarding model, virtualization is implemented by using a FlowVisor (Flowvisor). On the analogy of virtualization of a computer, the FlowVisor is a network virtualization layer located between a hardware structure element and software. The FlowVisor allows multiple controllers to simultaneously control one OpenFlow switch, but each controller can control only a particular virtual network (that is, a slice (slice)) passing through the OpenFlow switch.

The FlowVisor originates from a virtual machine concept hypervisor (hypervisor) in the field of computation. The hypervisor listens to a to-be-run CPU instruction. If there is a virtual resource in the instruction, a value of the resource needs to be changed, so that the resource is mapped to an actual hardware resource, and then the instruction is run. A principle of the FlowVisor is similar to that of the hypervisor. The FlowVisor listens to OpenFlow protocols delivered by all controllers. If there is a virtual resource in the protocols, a value of the virtual resource is changed, so that the virtual resource is mapped to an actual hardware resource.

In an actual data transmission network architecture, a forwarding process is particularly complex, and a FlowVisor is also particularly complex, thereby increasing complexity of network management and maintenance and leading to relatively low network efficiency.

SKOLDSTROM PONTUS ET AL: "Implementation and Evaluation of a Carrier-grade OpenFlow Virtualization Scheme", 2013 SECOND EUROPEAN WORKSHOP ON SOFTWARE DEFINED NETWORKS,IEEE,10 October 2013 (2013-10-10), pages 75-80, discloses a flexible virtualization scheme for OpenFlow and the implementation of the proposed scheme and point out relevant lessons learned during the process, leading to architectural and technological updates. And evaluate the system in terms of data path performance: the impact on forwarding latency is negligible, while the impact on network throughput is depending on the type of traffic and the choice of encapsulation technology.

### SUMMARY

Embodiments of the present invention provide a method for processing a packet in a network, a forwarding device, and a packet processing system, which can improve network efficiency.

According to a first aspect, a method for processing a packet in a network is provided, where the network includes a resource manager, a forwarding device, and multiple controllers, the forwarding device is separately connected to the resource manager and the multiple controllers, and the method includes:
receiving by the forwarding device, a virtual device creation message from the resource manager, wherein the virtual device creation message carries a controller identifier and resource information about an allocated resource; and
creating, by the forwarding device , on the forwarding device according to the resource information, a virtual device for a controller identified in the virtual device creation message;
   creating, by the forwarding device, a flow table in the corresponding virtual device according to a flow table creation message from the controller; and storing a correspondence between a first identifier of a to-be-created flow table that is carried in the flow table creation message and a second identifier of the flow table that is created on the forwarding device according to the flow table creation message, wherein the second identifier is used to uniquely identify the created flow table on the forwarding device;
   receiving, by the forwarding device, a flow entry creation message from the controller, where the flow entry creation message carries a to-be-created flow entry and the first identifier of the flow table that is to store the flow entry; and obtaining, according to the correspondence, the second identifier corresponding to the first identifier, and storing the flow entry in the flow table corresponding to the obtained second identifier; and
   receiving, by the forwarding device, a data packet, performing matching for the data packet by using a preset packet identification rule, to obtain the first identifier of the flow table for processing the data packet, obtaining, from the correspondence, the second identifier corresponding to the first identifier, and processing the data packet according to the flow entry in the flow table corresponding to the second identifier.

With reference to the first aspect or any possible implementation manner above, in a second possible implementation manner, the resource information includes one or more of a forwarding bandwidth, a memory space occupied by a flow table, a CPU usage, a packet buffer size, or a quantity of queues.

With reference to the first aspect or any possible implementation manner above, in a third possible implementation manner, the creating, by the forwarding device, a flow table in the corresponding virtual device according to a flow table creation message from the controller specifically includes:
receiving the flow table creation message from the controller, where the flow table creation message carries the first identifier of the to-be-created flow table and a controller identifier; and
creating the flow table in the virtual device corresponding to the controller identifier, where the created flow table has the second identifier.

With reference to the first aspect or any possible implementation manner above, in a fourth possible implementation manner, the flow entry creation message further carries a controller identifier, and the obtaining, according to the correspondence, the second identifier corresponding to the first identifier specifically includes:
locating the corresponding first identifier according to the controller identifier in the flow entry creation message; and
obtaining, according to the correspondence, the second identifier corresponding to the first identifier.

With reference to the first aspect or any possible implementation manner above, in a fifth possible implementation manner, the packet identification rule includes a correspondence between data packet characteristic information and a flow table; and the data packet characteristic information includes one or more of a virtual local area network VLAN, an IP address segment, a port, or a field of a fixed offset in a data packet.

With reference to the first aspect or any possible implementation manner above, in a sixth possible implementation manner, before the performing matching for the data packet by using a preset packet identification rule, the method further includes: receiving the packet identification rule of the resource manager.

According to a second aspect, a forwarding device is provided, including:
a first port, configured to connect to a resource manager and configured to receive a virtual device creation message from the resource manager, wherein the virtual device creation message carries a controller identifier and resource information about an allocated resource;
a first processor, connected to the first port, and configured to create, on the forwarding device according to the resource information, a virtual device for a controller identified in the virtual device creation message;
a second port, configured to: connect to multiple controllers, and receive a flow table creation message from the controller;
a second processor, connected to the second port, and configured to: create a flow table in the corresponding virtual device according to the flow table creation message from the controller, and store, in a memory, a correspondence between a first identifier of a to-be-created flow table that is carried in the flow table creation message and a second identifier of the flow table that is created on the forwarding device according to the flow table creation message; receive a flow entry creation message from the controller, where the flow entry creation message carries a to-be-created flow entry and the first identifier of the flow table that is to store the flow entry; and obtain, according to the correspondence, the second identifier corresponding to the first identifier, and store the flow entry in the flow table corresponding to the obtained second identifier; and
a data processor, configured to: receive a data packet, perform matching for the data packet by using a packet identification rule stored in the memory, to obtain the first identifier of the flow table for processing the data packet, obtain, from the correspondence, the second identifier corresponding to the first identifier, and process the data packet according to the flow entry in the flow table corresponding to the second identifier.

With reference to the second aspect or any possible implementation manner above, in a second possible implementation manner, the first port is further configured to: receive the packet identification rule of the resource manager, and store the received packet identification rule in the memory.

According to a third aspect, a packet processing system is provided, including a resource manager, multiple controllers, and a forwarding device, where the forwarding device is separately connected to the resource manager and the multiple controllers;
the resource manager is configured to send a virtual device creation message and instruct the forwarding device to separately create a corresponding virtual device on the forwarding device for each controller identified in the virtual device creation message; wherein the virtual device creation message carries a controller identifier and resource information about an allocated resource; and
the forwarding device is configured to: create a flow table in the corresponding virtual device according to a flow table creation message from the controller; store a correspondence between a first identifier of a to-be-created flow table that is carried in the flow table creation message and a second identifier of the flow table that is created on the forwarding device according to the flow table creation message; receive a flow entry creation message from the controller, where the flow entry creation message carries a to-be-created flow entry and the first identifier of the flow table that is to store the flow entry; obtain, according to the correspondence, the second identifier corresponding to the first identifier, and store the flow entry in the flow table corresponding to the obtained second identifier; and receive a data packet, perform matching for the data packet by using a preset packet identification rule, to obtain the first identifier of the flow table for processing the data packet, obtain, from the correspondence, the second identifier corresponding to the first identifier, and process the data packet according to the flow entry in the flow table corresponding to the second identifier.

With reference to the third aspect, in a first possible implementation manner, the controller is further configured to send a resource allocation request message to the resource manager, and the resource manager is configured to send the resource information about an allocated resource to the forwarding device according to the resource allocation request message.

With reference to the third aspect or any possible implementation manner above, in a second possible implementation manner, the resource information includes one or more of a forwarding bandwidth, a memory space occupied by a flow table, a CPU usage, a packet buffer size, or a quantity of queues.

Based on the foregoing technical solutions, in the embodiments of the present invention, a virtual device corresponding to a controller is created, and a flow table and a flow entry of the controller are created in the virtual device corresponding to the controller, thereby reducing complexity of network management and maintenance and improving network efficiency.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a network according to an embodiment of the present invention;
FIG. 2 is a schematic flowchart of a method for processing a packet in a network according to an embodiment of the present invention;
FIG. 3 is a flowchart of interaction of a method for processing a packet in a network according to an embodiment of the present invention;
FIG. 4 is a schematic block diagram of a forwarding device according to an embodiment of the present invention;
FIG. 5 is a schematic block diagram of a packet processing system according to an embodiment of the present invention; and
FIG. 6 is schematic structural diagram of a forwarding device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

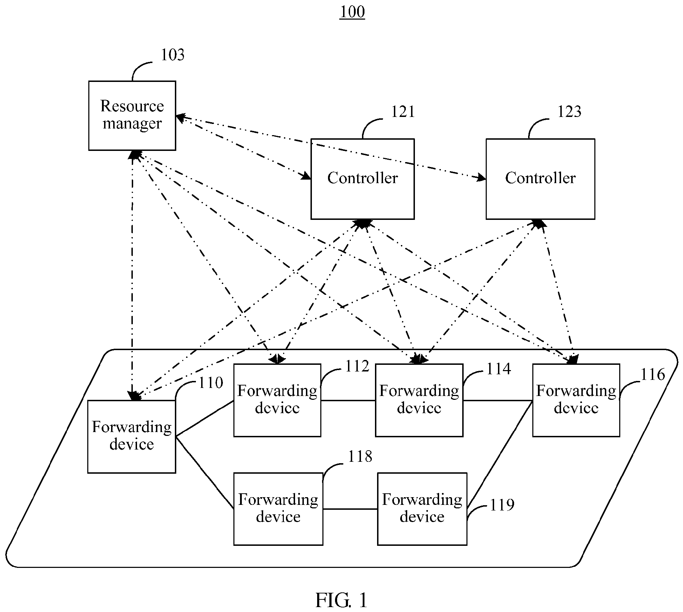

FIG. 1 is a schematic diagram of a network according to an embodiment of the present invention. As shown in FIG. 1, the network 100 includes: one or more forwarding devices (multiple forwarding devices are used as an example in the figure, for example, forwarding devices 110, 112, 114, 116, 118, and 119), multiple controllers 121 and 123, and a resource manager 103. Each forwarding device may be separately connected to the resource manager 103 and the multiple controllers. In FIG. 1, one controller may correspond to one virtual operator. Therefore, different controllers may correspond to different virtual operators. The controller may apply to the resource manager for a resource, and the resource manager may instruct the forwarding device to allocate a resource to the controller for creating a virtual device (that is, a virtual machine).

It should be understood that in this embodiment of the present invention, a "flow table" may be referred to as a "forwarding flow table", a "forwarding table", or a "table (table)".

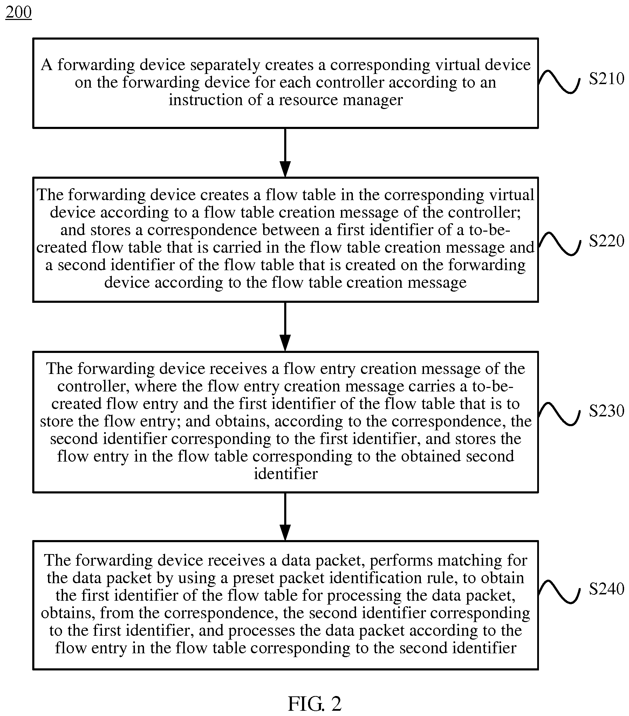

FIG. 2 is a schematic flowchart of a method 200 for processing a packet in a network according to an embodiment of the present invention. The network includes a resource manager, a forwarding device, and multiple controllers, where the forwarding device is separately connected to the resource manager and the multiple controllers. For example, the network may be the network shown in FIG. 1. The method 200 is executed by the forwarding device (for example, the forwarding device 110 in FIG. 1). As shown in FIG. 2, the method 200 includes:
S210: The forwarding device separately creates a corresponding virtual device on the forwarding device for each controller according to an instruction of the resource manager.
S220: The forwarding device creates a flow table in the corresponding virtual device according to a flow table creation message from the controller; and stores a correspondence between a first identifier of a to-be-created flow table that is carried in the flow table creation message and a second identifier of the flow table that is created on the forwarding device according to the flow table creation message.

The first identifier is used to identify the to-be-created flow table, and the identifier may be identified by the controller that sends the flow table creation message, and may be an index, other information that can identify the to-be-created flow table of the controller, or the like. The second identifier is used to uniquely identify the created flow table on the forwarding device, can be identified by the forwarding device, and may also be an index, other information that can identify the flow table on the forwarding device, or the like.

S230: The forwarding device receives a flow entry creation message from the controller, where the flow entry creation message carries a to-be-created flow entry and the first identifier of the flow table that is to store the flow entry; and obtains, according to the correspondence, the second identifier corresponding to the first identifier, and stores the flow entry in the flow table corresponding to the obtained second identifier.

S240: The forwarding device receives a data packet, performs matching for the data packet by using a preset packet identification rule, to obtain the first identifier of the flow table for processing the data packet, obtains, from the correspondence, the second identifier corresponding to the first identifier, and processes the data packet according to the flow entry in the flow table corresponding to the second identifier.

In this embodiment of the present invention, a forwarding device separately creates a corresponding virtual device on the forwarding device for each controller according to an instruction of a resource manager, then receives a flow table creation message and a flow entry creation message that are sent by the controller, creates a flow table and a flow entry of the controller in the virtual device corresponding to the controller, and forwards a received data packet according to the created flow entry. In this way, each controller has a corresponding virtual device in the forwarding device, and can directly manage the virtual device, thereby reducing complexity of network management and maintenance and improving network efficiency.

Therefore, by means of the method for processing a packet in a network of this embodiment of the present invention, a virtual device corresponding to a controller is created, and a flow table and a flow entry of the controller are created in the virtual device corresponding to the controller, thereby reducing complexity of network management and maintenance and improving network efficiency.

In S210, the forwarding device receives the instruction of the resource manager, for example, a virtual device creation message, and separately creates, for each controller on the forwarding device according to the instruction of the resource manager, the virtual device corresponding to each controller.

Optionally, in an embodiment of the present invention, the separately creating, by the forwarding device, a corresponding virtual device on the forwarding device for each controller according to an instruction of the resource manager may specifically include:
receiving a virtual device creation message from the resource manager, where the virtual device creation message carries a controller identifier and information about an allocated resource, where the controller identifier may be a device identifier of a controller, a MAC (Media Access Control, Media Access Control) address, an IP address, other information that can uniquely identify the controller, or the like; and
creating, on the forwarding device according to the resource information, a virtual device for a controller identified in the virtual device creation message, where
the resource information indicates a resource needed by the controller identified in the virtual device creation message, and optionally, the resource information may include one or more of a forwarding bandwidth, a memory space occupied by a flow table (briefly referred to as a flow table space below), a CPU usage, a packet buffer size, or a quantity of queues.

For example, the virtual device creation message sent by the resource manager to the forwarding device instructs to create a virtual device for a controller 121, where the virtual device creation message carries an identifier of the controller 121 and information about a resource allocated to the controller 121. For example, a flow table space of the controller 121 is 1024 K bits (bit), a forwarding bandwidth is 5 G, and a packet buffer size is 6 K.

The forwarding device creates, on the forwarding device according to the resource information, the virtual device for the controller identified in the virtual device creation message. That is, the forwarding device creates the virtual device for the controller and allocates a resource indicated by the resource information. For example, the forwarding device creates the virtual device on the forwarding device for the controller 121, and allocates, to the controller 121, a flow table space of 1024 K bits, a forwarding bandwidth of 5 G, and a packet buffer of 6 K.

Optionally, the resource manager may send the virtual device creation message to the forwarding device based on an application of the controller or actively.

Optionally, after the virtual device is created for the controller, the forwarding device may further send a virtual device creation completion message to the resource manager. Correspondingly, the resource manager may further send a virtual device creation response message to the controller.

In S220, the forwarding device creates the flow table in the corresponding virtual device according to the flow table creation message from the controller; and stores the correspondence between the first identifier of the to-be-created flow table that is carried in the flow table creation message and the second identifier of the flow table that is created on the forwarding device according to the flow table creation message.

After the virtual device corresponding to the controller is created, the controller may send the flow table creation message to the forwarding device, and the forwarding device creates the flow table in the corresponding virtual device according to the flow table creation message from the controller.

In this embodiment of the present invention, the first identifier of the flow table represents the identifier of the to-be-created flow table that is carried in a flow table creation message, and the first identifier is used by the controller to identify the flow table. For example, the first identifier is an index, the controller 121 sends a flow table creation message for creating a table 1 to the forwarding device, a first identifier of the to-be-created table 1 is 1, and the first identifier is used by the controller 121 to identify the table.

The second identifier of the flow table represents the identifier of the created flow table on the forwarding device, and the second identifier is used by the forwarding device to identify the flow table. Similarly, for example, the second identifier is an index, the flow table creation message delivered by the controller carries the first identifier 1 of the to-be-created flow table 1, the forwarding device already has multiple tables before receiving the flow table creation message, and because indexes cannot be the same, a flow table created by the forwarding device for the controller 121 according to the flow table creation message from the controller 121 for creating the table 1 is actually a table 5 in all flow tables on the forwarding device, that is, the created flow table is a global table 5. Therefore, a second identifier of the created flow table is 5, and the second identifier is used by the forwarding device to identify the flow table.

Specific content of the first identifier and the second identifier of the flow table may be different. Therefore, the forwarding device needs to store a correspondence between the first identifier and the second identifier of the flow table, that is, store a correspondence between the first identifier of the to-be-created flow table that is carried in the flow table creation message and the second identifier of the flow table that is created on the forwarding device according to the flow table creation message.

For example, the forwarding device creates the global table 5 according to the flow table creation message from the controller 121 for creating the table 1, and the correspondence between the first identifier and the second identifier that is stored in the forwarding device may be that the table 1 of the controller 121 corresponds to the global table 5.

Optionally, in an embodiment of the present invention, the creating, by the forwarding device, a flow table in the corresponding virtual device according to a flow table creation message from the controller specifically includes:
receiving the flow table creation message from the controller, where the flow table creation message carries the first identifier of the to-be-created flow table and a controller identifier; and
creating the flow table in the virtual device corresponding to the controller identifier, where the created flow table has the second identifier.

Specifically, the flow table creation message from the controller carries the first identifier of the to-be-created flow table and the controller identifier. After receiving the flow table creation message, the forwarding device creates the flow table in the virtual device corresponding to the controller identifier.

In another embodiment, the flow table creation message sent by the controller may further indicate a flow entry (entry) quantity of the to-be-created flow table, an entry width, and a manner of searching the flow table.

For example, the controller 121 sends the flow table creation message for creating the table 1 to the forwarding device, to indicate that the table 1 occupies 4096 entries, each entry has a width of 32 bits, and the search manner is performing linear search by using a virtual local area network (Virtual Local Area Network, VLAN). The forwarding device applies, according to the flow table creation message, for a flow table space of 4096*32 bits in a flow table space in the virtual device corresponding to the controller 121, to create the table 5.

Then the controller 121 sends a flow table creation message for creating a table 2 to the forwarding device, to indicate that the table 2 occupies 32 entries, an entry width is 16 bits, and a search manner is searching according to a source port number. The forwarding device applies, according to the flow table creation message, for a flow table space of 32*16 bits in the flow table space in the virtual device corresponding to the controller 121, to create a table 6, and stores a correspondence that the table 2 of the controller 121 corresponds to the global table 6.

In S230, the forwarding device receives the flow entry creation message from the controller, where the flow entry creation message carries the to-be-created flow entry and the first identifier of the flow table that is to store the flow entry; and obtains, according to the correspondence, the second identifier corresponding to the first identifier, and stores the flow entry in the flow table corresponding to the obtained second identifier.

After the flow table of the controller is created, the controller sends the flow entry creation message to the forwarding device, to instruct to create the flow entry in the flow table of the controller. The flow entry creation message carries the to-be-created flow entry and the first identifier of the flow table that is to store the flow entry. After receiving the flow entry creation message sent by the controller, the forwarding device obtains, according to the correspondence, the second identifier corresponding to the first identifier, and stores the flow entry in the flow table corresponding to the second identifier.

The flow entry creation message sent by the controller is directed at the first identifier of the flow table, that is, the identifier used by the controller to identify the flow table. For example, the controller 121 sends, to the forwarding device, a message for creating an entry in the table 1: When the VLAN is 100, an action is adding a VLAN 10 and skipping to query the table 2. The table 1 and the table 2 in the message are the table 1 and the table 2 of the controller 121, and are respectively the global table 5 and the global table 6. The forwarding device first determines, according to the correspondence between the first identifier and the second identifier, the second identifier corresponding to the first identifier in the flow entry creation message, and then creates the flow entry according to the second identifier.

Optionally, in an embodiment of the present invention, the flow entry creation message further carries a controller identifier, and the obtaining, according to the correspondence, the second identifier corresponding to the first identifier specifically includes:
locating the corresponding first identifier according to the controller identifier in the flow entry creation message; and
obtaining, according to the correspondence, the second identifier corresponding to the first identifier.

Specifically, the flow entry creation message carries the controller identifier. For example, the flow entry creation message sent by the controller 121 carries the identifier of the controller 121. The forwarding device locates a corresponding first identifier according to the controller identifier in the flow entry creation message, that is, determines a first identifier corresponding to the controller, and then obtains, according to the correspondence, a second identifier corresponding to the first identifier.

The entry creation message from the controller 121 is used as an example. After receiving the message, the forwarding device queries the correspondence and obtains that the table 1 of the controller 121 is the global table 5 and the table 2 of the controller 121 is the global table 6. Therefore, an action: adding a VLAN 10 and skipping to query the table 6 is created in the table 5 on an entry whose VLAN is 100, that is, an entry 100.

Then the controller 121 sends, to the forwarding device, a message for creating an entry in the table 2: When a source port number is 1, an action is forwarding a packet to a port 6 and sending the packet to the outside. After receiving the message, the forwarding device queries the correspondence and obtains that the table 2 of the controller 121 is the global table 6. Therefore, an action of forwarding a packet to the port 6 and sending the packet to the outside is created in the table 6 on an entry whose source port number is 1, that is, an entry 1.

The forwarding device may create multiple tables and corresponding entries for the controller according to the flow table creation message and the flow entry creation message that are sent by the controller, so as to implement a forwarding process of the controller.

Certainly, if first identifiers of to-be-created flow tables of all controllers are planned in advance, so that the first identifiers of the to-be-created flow tables of all the controllers are different, the forwarding device may directly find the second identifier by using the first identifier and the correspondence between the first identifier and the second identifier, to obtain the flow table indicated by the second identifier, and store the flow entry.

In this embodiment of the present invention, optionally, the virtual device creation message carries authentication information of the controller.

In this case, the method 200 further includes:
creating, by the forwarding device according to the authentication information of the controller, a configuration interface corresponding to the controller; and
correspondingly, receiving, by the forwarding device by using the configuration interface, the flow table creation message sent by the controller, and receiving, by using the configuration interface, the flow entry creation message sent by the controller.

The authentication information of the controller indicates an authentication parameter of a command message (the flow table creation message and the flow entry creation message) of the controller, for example, a username and a password, or an Internet Protocol (Internet Protocol, IP) address of a command message from the controller.

For example, an IP address of a command message from the controller 121 that is carried in the virtual device creation message sent by the resource manager to the forwarding device is 192.168.1.1.

The forwarding device creates, according to the authentication information of the controller, the configuration interface corresponding to the controller; and then the forwarding device receives, by using the configuration interface, the flow table creation message and the flow entry creation message that are sent by the controller. That is, the controller may manage, by using the configuration interface, the virtual device corresponding to the controller.

In S240, the forwarding device receives the data packet, performs matching for the data packet by using the preset packet identification rule, to obtain the first identifier of the flow table for processing the data packet, obtains, from the correspondence, the second identifier corresponding to the first identifier, and processes the data packet according to the flow entry in the flow table corresponding to the second identifier.

The packet identification rule is used to identify a packet. Optionally, the packet identification rule may include a correspondence between data packet characteristic information and a flow table. For example, the packet identification rule may be a correspondence between data packet characteristic information and the flow table of each controller, and specifically, may be a correspondence between data packet characteristic information and a first flow table of each controller. Optionally, the data packet characteristic information includes one or more of a VLAN, an IP address segment, a port, or a field of a fixed offset in a data packet.

An example in which the data packet characteristic information is a port is used. Assuming that there are ports 1 to 12 on the forwarding device, a packet identification rule delivered by the controller 121 may be: Flow tables corresponding to data packets received by ports 1 to 6 are the table 1 of the controller 121.

After receiving the data packet, the forwarding device performs matching for the data packet by using the preset packet identification rule, to obtain the first identifier of the flow table for processing the data packet. For example, a first identifier of a first flow table of the controller for processing the data packet is obtained. Then the forwarding device obtains, according to the correspondence, the second identifier corresponding to the first identifier, and processes the data packet according to the flow entry in the flow table corresponding to the second identifier.

For example, in a case in which the forwarding device already creates the table 1 and the table 2 and the corresponding entries for the controller 121, after a packet (having a source port number of 1 and a VLAN of 100) reaches the forwarding device from the port 1, the forwarding device obtains that the source port number of the packet conforms to the packet identification rule of the controller 121 (packets whose source port numbers are 1 to 6 correspond to the flow table of the controller 121), and determines a flow table of the controller 121 that corresponds to the packet. The forwarding device determines, according to the correspondence, that the table 1 of the controller 121 is the global table 5, further searches the table 5 (the table 1 of the controller 121) according to the VLAN 100, and after finding the entry 100, adds a VLAN 10 to the packet and skips to the table 6 (the table 2 of the controller 121) according to the action of the entry 100. The forwarding device searches the table 6 according to the source port number 1, and after finding the entry 1, sends the packet to the outside from the port 6 according to the action of the entry 1.

Optionally, in an embodiment of the present invention, before the performing matching for the data packet by using a preset packet identification rule, the method 200 further includes: receiving the packet identification rule of the resource manager.

Specifically, the packet identification rule may be sent by the resource manager to the forwarding device. For example, the virtual device creation message carries a packet identification rule corresponding to the controller. In this case, the forwarding device records the packet identification rule of the controller. For example, a classifier may be disposed in the forwarding device, and the packet identification rule of the controller is added to the classifier.

Therefore, by means of the method for processing a packet in a network of this embodiment of the present invention, a virtual device corresponding to a controller is created on a forwarding device, a flow table and a flow entry of the controller are created in the virtual device corresponding to the controller, and a packet is forwarded according to a forwarding process implemented by the flow table and the flow entry, thereby reducing complexity of network management and maintenance and improving network efficiency.

The following describes in detail the embodiments of the present invention by using specific examples. It should be noted that, these examples are merely intended to help a person skilled in the art to better understand the embodiments of the present invention, but not to limit the scope of the embodiments of the present invention.

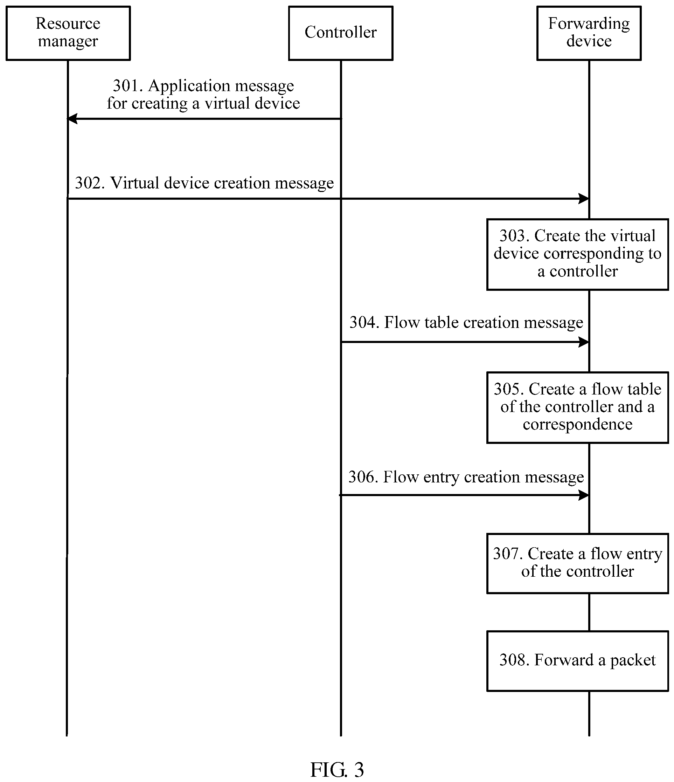

FIG. 3 is a flowchart of interaction of a method for processing a packet in a network according to an embodiment of the present invention. In FIG. 3, a forwarding device may be any forwarding device in FIG. 1; a controller may be any controller in FIG. 1 (a controller A, a controller B, and a controller C are used as an example for description below); and a resource manager may be the resource manager 103 in FIG. 1.

301: The controller sends an application message for creating a virtual device to the resource manager.

For example, the controller A sends an application message for creating a virtual device to the resource manager, to indicate that packets whose source port numbers are 1 to 6 are packets of the controller A, a flow table space of the controller A is 1024 K bits, a forwarding bandwidth is 5 G, and a packet buffer size is 6 K.

The controller B sends an application message for creating a virtual device to the resource manager, to indicate that packets whose source port numbers are 10 to 12, whose VLANs are 100, and whose IP segment is 192.168.1.x are packets of the controller B, a flow table space of the controller B is 1 K bits, a forwarding bandwidth is 5 G, and a packet buffer size is 2 K.

The controller C sends an application message for creating a virtual device to the resource manager, to indicate that packets whose first bytes (byte) is 0x05 and whose source port numbers are 15 to 20 are packets of the controller C, a flow table space of the controller C is 1 K bits, a forwarding bandwidth is 5 G, and a packet buffer size is 2 K.

302: The resource manager sends a virtual device creation message to the forwarding device.

For example, the virtual device creation message sent by the resource manager to the forwarding device instructs to create the virtual device for the controller A. The virtual device creation message indicates that the packets whose source port numbers are 1 to 6 are the packets of the controller A, the flow table space of the controller A is 1024 K bits, the forwarding bandwidth is 5 G, and the packet buffer size is 6 K.

The virtual device creation message sent by the resource manager to the forwarding device instructs to create the virtual device for the controller B. The virtual device creation message indicates that the packets whose source port numbers are 10 to 12, whose VLANs are 100, and whose IP segment is 192.168.1.x are the packets of the controller B, the flow table space of the controller B is 1 K bits, the forwarding bandwidth is 5 G, and the packet buffer size is 2 K.

The virtual device creation message sent by the resource manager to the forwarding device instructs to create the virtual device for the controller C. The virtual device creation message indicates that packets whose first bytes are 0x05 and whose source port numbers are 15 to 20 are the packets of the controller C, the flow table space of the controller C is 1 K bits, the forwarding bandwidth is 5 G, and the packet buffer size is 2 K.

303: The forwarding device creates the virtual device corresponding to the controller.

For example, the forwarding device creates, according to resource information corresponding to the controller A, the virtual device corresponding to the controller A, creates a configuration interface corresponding to the controller A, and records a rule that the packets whose source port numbers are 1 to 6 correspond to a flow table of the controller A.

The forwarding device creates, according to resource information corresponding to the controller B, the virtual device corresponding to the controller B, creates a configuration interface corresponding to the controller B, and records a rule that the packets whose source port numbers are 10 to 12, whose VLANs are 100, and whose IP segment is 192.168.1.x correspond to a flow table of the controller B.

The forwarding device creates, according to resource information corresponding to the controller C, the virtual device corresponding to the controller C, creates a configuration interface corresponding to the controller C, and records a rule that the packet whose first bytes are 0x05 and whose source port numbers are 15 to 20 correspond to a flow table of the controller C.

304: The controller sends a flow table creation message to the forwarding device.

For example, the controller A sends, to the forwarding device, a flow table creation message for creating a table 1, that is, a table 1 of the controller A, to indicate that the table 1 occupies 4096 entries, an entry width is 32 bits, and a search manner is performing linear search by using a VLAN. The controller A sends, to the forwarding device, a flow table creation message for creating a table 2, that is, a table 2 of the controller A, to indicate that the table 2 occupies 32 entries, an entry width is 16 bits, and a search manner is search according to a source port number.

The controller B sends, to the forwarding device, a flow table creation message for creating a table 1, that is, a table 1 of the controller B, to indicate that the table 1 occupies 32 entries, an entry width is 16 bits, and a search manner is search according to a source port number.

The controller C sends, to the forwarding device, a flow table creation message for creating a table 1, that is, a table 1 of the controller C, to indicate that the table 1 occupies 32 entries, an entry width is 16 bits, and a search manner is search according to a source port number.

305: The forwarding device creates a flow table of the controller in the virtual device corresponding to the controller, and creates a correspondence between a first identifier and a second identifier of the flow table of the controller.

For example, the forwarding device applies, according to the flow table creation message from the controller A, for a flow table space of 4096*32 bits in the flow table space in the virtual device corresponding to the controller A, to create a table 5, and create a correspondence that the table 1 of the controller A is the global table 5; and the forwarding device applies, according to the flow table creation message from the controller A, for a flow table space of 32*16 bits in the flow table space in the virtual device corresponding to the controller A, to create a table 6, and create a correspondence that the table 2 of the controller A is the global table 6.

The forwarding device applies, according to the flow table creation message from the controller B, for a flow table space of 32*16 bits in the flow table space in the virtual device corresponding to the controller B, to create a table 9, and creates a correspondence that the table 1 of the controller B is the global table 9.

The forwarding device applies, according to the flow table creation message from the controller C, for a flow table space of 32*16 bits in the flow table space in the virtual device corresponding to the controller C, to create a table 10, and create a correspondence that the table 1 of the controller C is the global table 10.

306: The controller sends a flow entry creation message to the forwarding device.

For example, the controller A sends, to the forwarding device, a message for creating an entry in the table 1: When the VLAN is 100, an action is adding a VLAN 10 and skipping to query the table 2. The controller A sends, to the forwarding device, a message for creating an entry in the table 2: When a source port number is 1, an action is forwarding a packet to a port 6 and sending the packet to the outside.

The controller B sends, to the forwarding device, a message for creating an entry in the table 1: When a source port number is 10, an action is forwarding a packet to a port 11 and sending the packet to the outside.

The controller C sends, to the forwarding device, a message for creating an entry in the table 1: When a source port number is 15, an action is forwarding a packet to a port 20 and sending the packet to the outside.

307: The forwarding device creates a flow entry of the controller according to the correspondence.

For example, after receiving the message from the controller A for creating the entry in the table 1, the forwarding device queries the correspondence and obtains that the table 1 of the controller A is the global table 5 and the table 2 of the controller A is the global table 6. Therefore, an action: adding a VLAN 10 and skipping to query the table 6 is created in the table 5 on an entry whose VLAN is 100, that is, an entry 100. After receiving the message from the controller A for creating the entry in the table 2, the forwarding device queries the correspondence and obtains that the table 2 of the controller A is the global table 6. Therefore, an action: forwarding a packet to a port 6 and sending the packet to the outside is created in the table 6 on an entry whose source port number is 1, that is, an entry 1.

After receiving the message from the controller B for creating the entry in the table 1, the forwarding device queries the correspondence and obtains that the table 1 of the controller B is the global table 9. Therefore, an action: forwarding a packet to a port 11 and sending the packet to the outside is created in the table 9 on an entry whose source port number is 10, that is, an entry 10.

After receiving the message from the controller C for creating the entry in the table 1, the forwarding device queries the correspondence and obtains that the table 1 of the controller C is the global table 10. Therefore, an action: forwarding a packet to a port 20 and sending the packet to the outside is created in a table 10 on an entry whose source port number is 15, that is, an entry 15.

308: The forwarding device forwards a packet.

For example, after a packet (having a source port number of 1 and a VLAN of 100) reaches the forwarding device from the port 1, the forwarding device determines, according to that the source port number 1 of the packet conforms to a packet identification rule of the controller A (the packets whose source port numbers are 1 to 6 correspond to the flow table of the controller A), a flow table of the controller A that corresponds to the packet. The forwarding device searches the table 5 (the table 1 of the controller A) according to the VLAN 100, and after finding the entry 100, adds a VLAN 10 to the packet and skips to the table 6 (the table 2 of the controller A) according to the action of the entry 100. The forwarding device searches the table 6 according to the source port number 1, and after finding the entry 1, sends the packet to the outside from the port 6 according to the action of the entry 1.

After a packet (having a source port number of 10, a VLAN of 100, and an IP of 192.168.1.8) reaches the forwarding device from the port 10, the forwarding device determines, according to that the source port number 10 of the packet conforms to a packet identification rule of the controller B (the packets whose source port numbers are 10 to 12, whose VLANs are 100, and whose IP segment is 192.168.1.x), a flow table of the controller B that corresponds to the packet. The forwarding device searches the table 9 (the table 1 of the controller B) according to the source port number 10, and after finding the entry 10, sends the packet to the outside from the port 11 according to the action of the entry 10.

After a packet (having a source port number of 15 and a first byte of 0x05) reaches the forwarding device from the port 15, the forwarding device determines, according to that the source port number 15 and the first byte 0x05 of the packet conform to a packet identification rule of the controller C (the packets whose first bytes are 0x05 and whose source port numbers are 15 to 20 correspond to the flow table of the controller C), a flow table of the controller C that corresponds to the packet. The forwarding device searches the table 10 (the table 1 of the controller C) according to the source port number 15, and after finding the entry 15, sends the packet to the outside from the port 20 according to the action of the entry 15.

By means of the method for processing a packet in a network of this embodiment of the present invention, a virtual device corresponding to a controller is created on a forwarding device, a flow table and a flow entry of the controller are created in the virtual device corresponding to the controller, and a packet is forwarded according to a forwarding process implemented by the flow table and the flow entry, thereby reducing complexity of network management and maintenance and improving network efficiency.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A method for processing a packet in a network according to an embodiment of the present invention is described above in detail, and a forwarding device and a packet processing system according to embodiments of the present invention are described below.

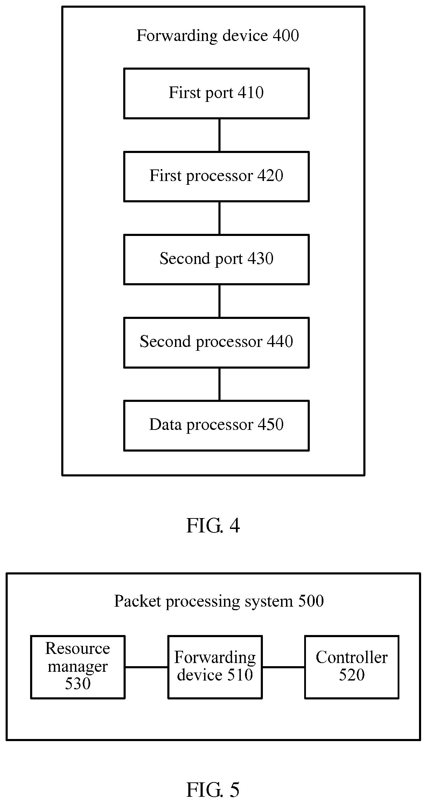

FIG. 4 is a schematic block diagram of a forwarding device 400 according to an embodiment of the present invention. As shown in FIG. 4, the forwarding device 400 includes:
a first port 410, configured to connect to a resource manager;
a first processor 420, connected to the first port 410, and configured to separately create a corresponding virtual device on the forwarding device for each controller according to an instruction of the resource manager;
a second port 430, configured to: connect to multiple controllers, and receive a flow table creation message from the controller;
a second processor 440, connected to the second port 430, and configured to: create a flow table in the corresponding virtual device according to the flow table creation message from the controller; store, in a memory, a correspondence between a first identifier of a to-be-created flow table that is carried in the flow table creation message and a second identifier of the flow table that is created on the forwarding device according to the flow table creation message, where the second identifier is used to uniquely identify the created flow table on the forwarding device; receive a flow entry creation message from the controller, where the flow entry creation message carries a to-be-created flow entry and the first identifier of the flow table that is to store the flow entry; and obtain, according to the correspondence, the second identifier corresponding to the first identifier, and store the flow entry in the flow table corresponding to the obtained second identifier; and
a data processor 450, configured to: receive a data packet, perform matching for the data packet by using a packet identification rule stored in the memory, to obtain the first identifier of the flow table for processing the data packet, obtain, from the correspondence, the second identifier corresponding to the first identifier, and process the data packet according to the flow entry in the flow table corresponding to the second identifier.

The forwarding device of this embodiment of the present invention creates a virtual device corresponding to a controller, and creates a flow table and a flow entry of the controller in the virtual device corresponding to the controller, thereby reducing complexity of network management and maintenance and improving network efficiency.

In this embodiment of the present invention, optionally, the first port 410 is specifically configured to receive a virtual device creation message from the resource manager, where the virtual device creation message carries a controller identifier and information about an allocated resource; and
the first processor 420 is specifically configured to create, on the forwarding device according to the resource information, a virtual device for a controller identified in the virtual device creation message.

In this embodiment of the present invention, optionally, the first port 410 is further configured to: receive the packet identification rule of the resource manager, and store the received packet identification rule in the memory.

The forwarding device 400 according to this embodiment of the present invention may correspond to the forwarding device in the method for processing a packet in a network according to the foregoing embodiment of the present invention, and the foregoing and other operations and/or functions of the modules in the forwarding device 400 are respectively used to implement corresponding processes of the methods described above. Details are not described herein again for brevity.

The forwarding device of this embodiment of the present invention creates a virtual device corresponding to a controller, creates a flow table and a flow entry of the controller in the virtual device corresponding to the controller, and forwards a packet according to a forwarding process implemented by the flow table and the flow entry, thereby reducing complexity of network management and maintenance and improving network efficiency.

FIG. 5 is a schematic block diagram of a packet processing system 500 according to an embodiment of the present invention. As shown in FIG. 5, the packet processing system 500 includes: a resource manager 530, multiple controllers 520, and a forwarding device 510, where the forwarding device 510 is separately connected to the resource manager 530 and the multiple controllers 520;
the resource manager 530 is configured to instruct the forwarding device 510 to separately create a corresponding virtual device on the forwarding device 510 for each controller 520; and
the forwarding device 510 is configured to: create a flow table in the corresponding virtual device according to a flow table creation message from the controller 520; store a correspondence between a first identifier of a to-be-created flow table that is carried in the flow table creation message and a second identifier of the flow table that is created on the forwarding device 510 according to the flow table creation message, where the second identifier is used to uniquely identify the created flow table on the forwarding device; receive a flow entry creation message from the controller 520, where the flow entry creation message carries a to-be-created flow entry and the first identifier of the flow table that is to store the flow entry; obtain, according to the correspondence, the second identifier corresponding to the first identifier, store the flow entry in the flow table corresponding to the obtained second identifier; receive a data packet, perform matching for the data packet by using a preset packet identification rule, to obtain the first identifier of the flow table for processing the data packet, obtain, from the correspondence, the second identifier corresponding to the first identifier, and process the data packet according to the flow entry in the flow table corresponding to the second identifier.

In this embodiment of the present invention, optionally, the controller 520 is further configured to send a resource allocation request message to the resource manager 530, and the resource manager 530 is configured to send information about an allocated resource to the forwarding device 510 according to the resource allocation request message.

In this embodiment of the present invention, optionally, the resource information includes one or more of a forwarding bandwidth, a memory space occupied by a flow table, a CPU usage, a packet buffer size, or a quantity of queues.

The forwarding device 510, the controllers 520, and the resource manager 530 in the packet processing system 500 according to this embodiment of the present invention may respectively correspond to the forwarding device, the controllers, and the resource manager in the method for processing a packet in a network according to the foregoing embodiment of the present invention, and the foregoing and other operations and/or functions of the forwarding device 510, the controllers 520, and the resource manager 530 are respectively used to implement corresponding processes of the methods described above. Details are not described herein again for brevity.

By means of the packet processing system of this embodiment of the present invention, complexity of network management and maintenance can be reduced, and network efficiency can be improved.

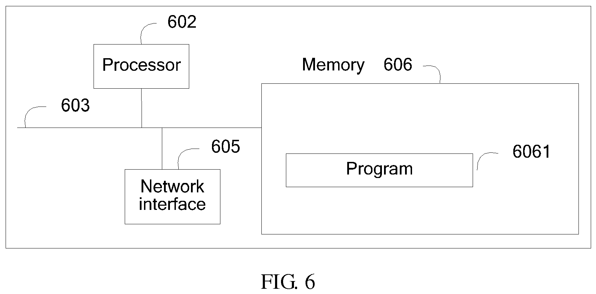

FIG. 6 shows a structure of a forwarding device according to another embodiment of the present invention, including at least one processor 602 (for example, a CPU), at least one network interface 605 or another communications interface, a memory 606, and at least one communications bus 603 configured to implement connection and communication between these apparatuses. The processor 602 is configured to execute an executable module, such as a computer program, stored in the memory 606. The memory 606 may include a high-speed random access memory (RAM: Random Access Memory), and may further include a non-volatile memory (non-volatile memory), such as at least one magnetic disk memory. Communication with and connection to at least another network element are implemented by using the at least one network interface 605 (which may be wired or wireless).

In some implementation manners, the memory 606 stores a program 6061, and the processor 602 executes the program 6061, to execute the following operations:
separately creating a corresponding virtual device on the forwarding device for each controller according to an instruction of a resource manager;
creating a flow table in the corresponding virtual device according to a flow table creation message from the controller; and storing a correspondence between a first identifier of a to-be-created flow table that is carried in the flow table creation message and a second identifier of the flow table that is created on the forwarding device according to the flow table creation message, where the second identifier is used to uniquely identify the created flow table on the forwarding device;
receiving, by using the network interface, a flow entry creation message from the controller, where the flow entry creation message carries a to-be-created flow entry and the first identifier of the flow table that is to store the flow entry; and obtaining, according to the correspondence, the second identifier corresponding to the first identifier, and storing the flow entry in the flow table corresponding to the obtained second identifier; and
receiving, by using the network interface, a data packet, performing matching for the data packet by using a preset packet identification rule, to obtain the first identifier of the flow table for processing the data packet, obtaining, from the correspondence, the second identifier corresponding to the first identifier, and processing the data packet according to the flow entry in the flow table corresponding to the second identifier.

Optionally, the processor is specifically configured to: receive a virtual device creation message from the resource manager by using the network interface, where the virtual device creation message carries a controller identifier and information about an allocated resource; and create, on the forwarding device according to the resource information, a virtual device for a controller identified in the virtual device creation message.

Optionally, the resource information includes one or more of a forwarding bandwidth, a memory space occupied by a flow table, a CPU usage, a packet buffer size, or a quantity of queues.

Optionally, the processor is specifically configured to: receive the flow table creation message from the controller by using the network interface, where the flow table creation message carries the first identifier of the to-be-created flow table and a controller identifier; and create the flow table in the virtual device corresponding to the controller identifier, where the created flow table has the second identifier.

Optionally, the flow entry creation message further carries a controller identifier; and
the processor is specifically configured to: locate the corresponding first identifier according to the controller identifier in the flow entry creation message; and obtain, according to the correspondence, the second identifier corresponding to the first identifier.

Optionally, the packet identification rule includes a correspondence between data packet characteristic information and a flow table; and the data packet characteristic information includes one or more of a virtual local area network VLAN, an IP address segment, a port, or a field of a fixed offset in a data packet.

Optionally, the processor is further configured to receive the packet identification rule of the resource manager by using the network interface.

As can be seen from the foregoing technical solutions provided in the embodiments of the present invention, in the embodiments of the present invention, a virtual device corresponding to a controller is created, and a flow table and a flow entry of the controller are created in the virtual device corresponding to the controller, thereby reducing complexity of network management and maintenance and improving network efficiency.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing a packet in a network, wherein the network comprises a resource manager, a forwarding device, and multiple controllers, the forwarding device is separately connected to the resource manager and the multiple controllers, and the method comprises:
receiving by the forwarding device, a virtual device creation message from the resource manager, wherein the virtual device creation message carries a controller identifier and resource information about an allocated resource; and
creating, by the forwarding device, on the forwarding device according to the resource information, a virtual device for a controller identified in the virtual device creation message;
creating, by the forwarding device, a flow table in the corresponding virtual device according to a flow table creation message from the controller; and storing a correspondence between a first identifier of a to-be-created flow table that is carried in the flow table creation message and a second identifier of the flow table that is created on the forwarding device according to the flow table creation message, wherein the second identifier is used to uniquely identify the created flow table on the forwarding device;
receiving, by the forwarding device, a flow entry creation message from the controller, wherein the flow entry creation message carries a to-be-created flow entry and the first identifier of the flow table that is to store the flow entry; and obtaining, according to the correspondence, the second identifier corresponding to the first identifier, and storing the flow entry in the flow table corresponding to the obtained second identifier; and
receiving, by the forwarding device, a data packet, performing matching for the data packet by using a preset packet identification rule, to obtain the first identifier of the flow table for processing the data packet, obtaining, from the correspondence, the second identifier corresponding to the first identifier, and processing the data packet according to the flow entry in the flow table corresponding to the second identifier.

2. The method according to claim 1, wherein the resource information comprises one or more of a forwarding bandwidth, a memory space occupied by a flow table, a CPU usage, a packet buffer size, or a quantity of queues.

3. The method according to claim 1, the creating, by the forwarding device, a flow table in the corresponding virtual device according to a flow table creation message from the controller specifically comprises:
receiving the flow table creation message from the controller, wherein the flow table creation message carries the first identifier of the to-be-created flow table and a controller identifier; and
creating the flow table in the virtual device corresponding to the controller identifier, wherein the created flow table has the second identifier.

4. The method according to claim 1, wherein the flow entry creation message further carries a controller identifier, and the obtaining, according to the correspondence, the second identifier corresponding to the first identifier specifically comprises:
locating the corresponding first identifier according to the controller identifier in the flow entry creation message; and
obtaining, according to the correspondence, the second identifier corresponding to the first identifier.

5. The method according to claim 1, wherein the packet identification rule comprises a correspondence between data packet characteristic information and a flow table; and the data packet characteristic information comprises one or more of a virtual local area network, VLAN, an IP address segment, a port, or a field of a fixed offset in a data packet.

6. The method according to claim 1 or 5, before the performing matching for the data packet by using a preset packet identification rule, further comprising: receiving the packet identification rule of the resource manager.

7. A forwarding device, comprising:
a first port (410), configured to connect to a resource manager and configured to receive a virtual device creation message from the resource manager, wherein the virtual device creation message carries a controller identifier and resource information about an allocated resource;
a first processor (420), connected to the first port, and configured to create, on the forwarding device according to the resource information, a virtual device for a controller identified in the virtual device creation message;
a second port (430), configured to: connect to multiple controllers, and receive a flow table creation message from the controller;
a second processor (440), connected to the second port, and configured to: create a flow table in the corresponding virtual device according to the flow table creation message from the controller, and store, in a memory, a correspondence between a first identifier of a to-be-created flow table that is carried in the flow table creation message and a second identifier of the flow table that is created on the forwarding device according to the flow table creation message, wherein the second identifier is used to uniquely identify the created flow table on the forwarding device; receive a flow entry creation message from the controller, wherein the flow entry creation message carries a to-be-created flow entry and the first identifier of the flow table that is to store the flow entry; and obtain, according to the correspondence, the second identifier corresponding to the first identifier, and store the flow entry in the flow table corresponding to the obtained second identifier; and
a data processor (450), configured to: receive a data packet, perform matching for the data packet by using a packet identification rule stored in the memory, to obtain the first identifier of the flow table for processing the data packet, obtain, from the correspondence, the second identifier corresponding to the first identifier, and process the data packet according to the flow entry in the flow table corresponding to the second identifier.

8. The forwarding device according to claim 7, wherein the first port (410) is further configured to: receive the packet identification rule of the resource manager, and store the received packet identification rule in the memory.

9. A packet processing system, comprising: a resource manager (530), multiple controllers (520), and a forwarding device (510), wherein the forwarding device is separately connected to the resource manager and the multiple controllers;
the resource manager (530) is configured to send a virtual device creation message and instruct the forwarding device to separately create a corresponding virtual device on the forwarding device for each controller identified in the virtual device creation message; wherein the virtual device creation message carries a controller identifier and resource information about an allocated resource, and
the forwarding device (510) is configured to: create a flow table in the corresponding virtual device according to a flow table creation message from the controller; store a correspondence between a first identifier of a to-be-created flow table that is carried in the flow table creation message and a second identifier of the flow table that is created on the forwarding device according to the flow table creation message, wherein the second identifier is used to uniquely identify the created flow table on the forwarding device; receive a flow entry creation message from the controller (520), wherein the flow entry creation message carries a to-be-created flow entry and the first identifier of the flow table that is to store the flow entry; obtain, according to the correspondence, the second identifier corresponding to the first identifier, and store the flow entry in the flow table corresponding to the obtained second identifier; and receive a data packet, perform matching for the data packet by using a preset packet identification rule, to obtain the first identifier of the flow table for processing the data packet, obtain, from the correspondence, the second identifier corresponding to the first identifier, and process the data packet according to the flow entry in the flow table corresponding to the second identifier.

10. The system according to claim 9, wherein the controller (520) is further configured to send a resource allocation request message to the resource manager, and the resource manager is configured to send the resource information about an allocated resource to the forwarding device according to the resource allocation request message.

11. The system according to claim 10, wherein the resource information comprises one or more of a forwarding bandwidth, a memory space occupied by a flow table, a CPU usage, a packet buffer size, or a quantity of queues.

## Patentansprüche

1. Verfahren zum Verarbeiten eines Pakets in einem Netz, wobei das Netz einen Betriebsmittelmanager, eine Weiterleitungsvorrichtung und mehrere Steuereinheiten umfasst, wobei die Weiterleitungsvorrichtung mit dem Betriebsmittelmanager und den mehreren Steuereinheiten separat verbunden ist, und wobei das Verfahren Folgendes umfasst:
Empfangen durch die Weiterleitungsvorrichtung einer Erzeugungsnachricht für eine virtuelle Vorrichtung von dem Betriebsmittelmanager, wobei die Erzeugungsnachricht für die virtuelle Vorrichtung einen Steuereinheitsbezeichner und Betriebsmittelinformationen über ein zugewiesenes Betriebsmittel führt; und
Erzeugen durch die Weiterleitungsvorrichtung auf der Weiterleitungsvorrichtung gemäß den Betriebsmittelinformationen einer virtuellen Vorrichtung für eine Steuereinheit, die in der Erzeugungsnachricht für die virtuelle Vorrichtung identifiziert ist;
Erzeugen durch die Weiterleitungsvorrichtung einer Ablauftabelle in der entsprechenden virtuellen Vorrichtung gemäß einer Ablauftabellenerzeugungsnachricht von der Steuereinheit; und Speichern einer Zuordnung zwischen einem ersten Bezeichner einer zu erzeugenden Ablauftabelle, der in der Ablauftabellenerzeugungsnachricht geführt ist, und einem zweiten Bezeichner der Ablauftabelle, die auf der Weiterleitungsvorrichtung gemäß der Ablauftabellenerzeugungsnachricht erzeugt wird, wobei der zweite Bezeichner verwendet wird, um die erzeugte Ablauftabelle auf der Weiterleitungsvorrichtung eindeutig zu identifizieren;
Empfangen durch die Weiterleitungsvorrichtung einer Ablaufeintragserzeugungsnachricht von der Steuereinheit, wobei die Ablaufeintragserzeugungsnachricht einen zu erzeugenden Ablaufeintrag und den ersten Bezeichner der Ablauftabelle, die den Ablaufeintrag speichern soll, führt; und
Erhalten gemäß der Zuordnung des zweiten Bezeichners, der dem ersten Bezeichner entspricht, und Speichern des Ablaufeintrags in der Ablauftabelle, die dem erhaltenen zweiten Bezeichner entspricht; und
Empfangen durch die Weiterleitungsvorrichtung eines Datenpakets, Ausführen von Abgleichen für das Datenpaket unter Verwendung einer voreingestellten Paketidentifizierungsregel, um den ersten Bezeichner der Ablauftabelle zum Verarbeiten des Datenpakets zu erhalten, Erhalten aus der Zuordnung des zweiten Bezeichners, der dem ersten Bezeichner entspricht, und Verarbeiten des Datenpakets gemäß dem Ablaufeintrag in der Ablauftabelle, die dem zweiten Bezeichner entspricht.

2. Verfahren nach Anspruch 1 wobei die Betriebsmittelinformationen eines oder mehrere aus einer Weiterleitungsbandbreite, einem Speicherplatz, der durch die Ablauftabelle belegt ist, einer CPU-Nutzung, einer Paketpuffergröße oder einer Anzahl von Warteschlagen umfassen.

3. Verfahren nach Anspruch 1, wobei das Erzeugen durch die Weiterleitungsvorrichtung einer Ablauftabelle in der entsprechenden virtuellen Vorrichtung gemäß einer Ablauftabellenerzeugungsnachricht von der Steuereinheit insbesondere Folgendes umfasst:
Empfangen der Ablauftabellenerzeugungsnachricht von der Steuereinheit, wobei die Ablauftabellenerzeugungsnachricht den ersten Bezeichner der zu erzeugenden Ablauftabelle und einen Steuereinheitsbezeichner führt; und
Erzeugen der Ablauftabelle in der virtuellen Vorrichtung, die dem Steuereinheitsbezeichner entspricht, wobei die erzeugte Ablauftabelle den zweiten Bezeichner aufweist.

4. Verfahren nach Anspruch 1, wobei die Ablaufeintragserzeugungsnachricht ferner einen Steuereinheitsbezeichner führt und das Erhalten gemäß der Zuordnung des zweiten Bezeichners, der dem ersten Bezeichner entspricht, insbesondere Folgendes umfasst:
Lokalisieren des entsprechenden ersten Bezeichners gemäß dem Steuereinheitsbezeichner in der Ablaufeintragserzeugungsnachricht; und
Erhalten gemäß der Zuordnung des zweiten Bezeichners, der dem ersten Bezeichner entspricht.

5. Verfahren nach Anspruch 1, wobei die Paketidentifizierungsregel eine Zuordnung zwischen Datenpaketeigenschaftsinformationen und einer Ablauftabelle umfasst; und die Datenpaketeigenschaftsinformationen eines oder mehrere aus einem virtuellen lokalen Netz, VLAN, einem IP-Adressensegment, einem Anschluss oder einem Feld eines festen Versatzes in einem Datenpaket umfassen.

6. Verfahren nach Anspruch 1 oder 5, das vor dem Ausführen von Abgleichen für das Datenpaket durch Verwenden einer voreingestellten Paketidentifizierungsregel ferner Folgendes umfasst: Empfangen der Paketidentifizierungsregel von dem Betriebsmittelmanager.

7. Weiterleitungsvorrichtung, die Folgendes umfasst:
einen ersten Anschluss (410), der konfiguriert ist, mit einem Betriebsmittelmanager zu verbinden, und konfiguriert ist, eine Erzeugungsnachricht für eine virtuelle Vorrichtung von dem Betriebsmittelmanager zu empfangen, wobei die Erzeugungsnachricht für die virtuelle Vorrichtung einen Steuereinheitsbezeichner und Betriebsmittelinformationen über ein zugewiesenes Betriebsmittel führt;
einen ersten Prozessor (420), der mit dem ersten Anschluss verbunden ist und konfiguriert ist, auf der Weiterleitungsvorrichtung gemäß den Betriebsmittelinformationen eine virtuelle Vorrichtung für eine Steuereinheit, die in der Erzeugungsnachricht für die virtuelle Vorrichtung identifiziert ist, zu erzeugen;
einen zweiten Anschluss (430), der konfiguriert ist: mit mehreren Steuereinheiten zu verbinden und eine Ablauftabellenerzeugungsnachricht von der Steuereinheit zu empfangen;
einen zweiten Prozessor (440), der mit dem zweiten Anschluss verbunden ist und konfiguriert ist: eine Ablauftabelle in der entsprechenden virtuellen Vorrichtung gemäß der Ablauftabellenerzeugungsnachricht von der Steuereinheit zu erzeugen und in einem Speicher eine Zuordnung zwischen einem ersten Bezeichner einer zu erzeugenden Ablauftabelle, der in der Ablauftabellenerzeugungsnachricht geführt ist, und einem zweiten Bezeichner der Ablauftabelle, der in der Weiterleitungsvorrichtung gemäß der Ablauftabellenerzeugungsnachricht erzeugt ist, zu speichern, wobei der zweite Bezeichner verwendet wird, um die erzeugte Ablauftabelle auf der Weiterleitungsvorrichtung eindeutig zu identifizieren; eine Ablaufeintragserzeugungsnachricht von der Steuereinheit zu empfangen, wobei die Ablaufeintragserzeugungsnachricht einen zu erzeugenden Ablaufeintrag und den ersten Bezeichner der Ablauftabelle, die den Ablaufeintrag speichern soll, führt; und gemäß der Zuordnung den zweiten Bezeichner, der dem ersten Bezeichner entspricht, zu erhalten und den Ablaufeintrag in der Ablauftabelle, die dem erhaltenen zweiten Bezeichner entspricht, zu speichern; und
einen Datenprozessor (450), der konfiguriert ist: ein Datenpaket zu empfangen, Abgleichen für das Datenpaket unter Verwendung einer in dem Speicher gespeicherten Paketidentifizierungsregel auszuführen, um den ersten Bezeichner der Ablauftabelle zum Verarbeiten des Datenpakets zu erhalten, aus der Zuordnung den zweiten Bezeichner, der dem ersten Bezeichner entspricht, zu erhalten und das Datenpaket gemäß dem Ablaufeintrag in der Ablauftabelle, die dem zweiten Bezeichner entspricht, zu verarbeiten.

8. Weiterleitungsvorrichtung nach Anspruch 7, wobei der erste Anschluss (410) ferner konfiguriert ist: die Paketidentifizierungsregel des Betriebsmittelmanagers zu empfangen und die empfangene Paketidentifizierungsregel in dem Speicher zu speichern.

9. Paketverarbeitungssystem, das Folgendes umfasst: einen Betriebsmittelmanager (530), mehrere Steuereinheiten (520) und eine Weiterleitungsvorrichtung (510), wobei die Weiterleitungsvorrichtung mit dem Betriebsmittelmanager und den mehreren Steuereinheiten separat verbunden ist;
der Betriebsmittelmanager (530) konfiguriert ist, eine Erzeugungsnachricht für eine virtuelle Vorrichtung zu senden und die Weiterleitungsvorrichtung anzuweisen, eine entsprechende virtuelle Vorrichtung auf der Weiterleitungsvorrichtung separat für jede Steuereinheit, die in der Erzeugungsnachricht für die virtuelle Vorrichtung identifiziert ist, zu erzeugen; wobei die Erzeugungsnachricht für die virtuelle Vorrichtung einen Steuereinheitsbezeichner und Betriebsmittelinformationen über ein zugewiesenes Betriebsmittel führt, und
die Weiterleitungsvorrichtung (510) konfiguriert ist: eine Ablauftabelle in der entsprechenden virtuellen Vorrichtung gemäß einer Ablauftabellenerzeugungsnachricht von der Steuereinheit zu erzeugen; eine Zuordnung zwischen einem ersten Bezeichner einer zu erzeugenden Ablauftabelle, der in der Ablauftabellenerzeugungsnachricht geführt ist, und einem zweiten Bezeichner der Ablauftabelle, der auf der Weiterleitungsvorrichtung gemäß der Ablauftabellenerzeugungsnachricht erzeugt ist, zu speichern, wobei der zweite Bezeichner verwendet wird, um die erzeugte Ablauftabelle auf der Weiterleitungsvorrichtung eindeutig zu identifizieren; eine Ablaufeintragserzeugungsnachricht von der Steuereinheit (520) zu empfangen, wobei die Ablaufeintragserzeugungsnachricht einen zu erzeugenden Ablaufeintrag und den ersten Bezeichner der Ablauftabelle, die den Ablaufeintrag speichern soll, führt; gemäß der Zuordnung den zweiten Bezeichner, die dem ersten Bezeichner entspricht, zu erhalten und den Ablaufeintrag in der Ablauftabelle, die dem erhaltenen zweiten Bezeichner entspricht, zu speichern; und ein Datenpaket zu empfangen, Abgleichen für das Datenpaket unter Verwendung einer voreingestellten Paketidentifizierungsregel auszuführen, um den ersten Bezeichner der Ablauftabelle zum Verarbeiten des Datenpakets zu erhalten, aus der Zuordnung den zweiten Bezeichner, der dem ersten Bezeichner entspricht, zu erhalten und das Datenpaket gemäß dem Ablaufeintrag in der Ablauftabelle, die dem zweiten Bezeichner entspricht, zu verarbeiten.

10. System nach Anspruch 9, wobei die Steuereinheit (520) ferner konfiguriert ist, eine Betriebsmittelzuweisungsanforderungsnachricht zu dem Betriebsmittelmanager zu senden, und der Betriebsmittelmanager konfiguriert ist, Betriebsmittelinformationen über ein gewiesenes Betriebsmittel zu der Weiterleitungsvorrichtung gemäß der Betriebsmittelzuweisungsanforderungsnachricht zu senden.

11. System nach Anspruch 10 wobei die Betriebsmittelinformationen eines oder mehrere aus einer Weiterleitungsbandbreite, einem Speicherplatz, der durch die Ablauftabelle belegt ist, einer CPU-Nutzung, einer Paketpuffergröße oder einer Anzahl von Warteschlagen umfassen.

## Revendications

1. Procédé de traitement d'un paquet dans un réseau, le réseau comprenant un gestionnaire de ressources, un dispositif de transfert et de multiples contrôleurs, le dispositif de transfert étant connecté séparément au gestionnaire de ressources et aux multiples contrôleurs, et le procédé consistant à :
recevoir, par le dispositif de transfert, un message de création de dispositif virtuel en provenance du gestionnaire de ressources, le message de création de dispositif virtuel transportant un identifiant de contrôleur et une information de ressource sur une ressource affectée ; et
créer, par le dispositif de transfert, sur le dispositif de transfert selon l'information de ressource, un dispositif virtuel pour un contrôleur identifié dans le message de création de dispositif virtuel ;
créer, par le dispositif de transfert, une table de flux dans le dispositif virtuel correspondant selon un message de création de table de flux en provenance du contrôleur ; et stocker une correspondance entre un premier identifiant d'une table de flux à créer qui est transporté dans le message de création de table de flux et un second identifiant de la table de flux qui est créé sur le dispositif de transfert selon le message de création de table de flux, le second identifiant étant utilisé pour identifier de manière unique la table de flux créée sur le dispositif de transfert ;
recevoir, par le dispositif de transfert, un message de création d'entrée de flux en provenance du contrôleur, le message de création d'entrée de flux transportant une entrée de flux à créer et le premier identifiant de la table de flux qui doit stocker l'entrée de flux ; et obtenir, selon la correspondance, le second identifiant correspondant au premier identifiant, et stocker l'entrée de flux dans la table de flux correspondant au second identifiant obtenu ; et
recevoir, par le dispositif de transfert, un paquet de données, réaliser une correspondance pour le paquet de données en utilisant une règle prédéfinie d'identification de paquet afin d'obtenir le premier identifiant de la table de flux pour traiter le paquet de données, obtenir, à partir de la correspondance, le second identifiant correspondant au premier identifiant, et traiter le paquet de données selon l'entrée de flux dans la table de flux correspondant au second identifiant.

2. Procédé selon la revendication 1, dans lequel l'information de ressource comprend un ou plusieurs éléments parmi une bande passante de transfert, un espace de mémoire occupé par une table de flux, une utilisation de CPU, une taille de mémoire tampon de paquets et un nombre de files d'attente.

3. Procédé selon la revendication 1, dans lequel la création, par le dispositif de transfert, d'une table de flux dans le dispositif virtuel correspondant selon un message de création de table de flux en provenance du contrôleur, consiste en particulier à :
recevoir le message de création de table de flux en provenance du contrôleur, le message de création de table de flux transportant le premier identifiant de la table de flux à créer et un identifiant de contrôleur ; et
créer la table de flux dans le dispositif virtuel correspondant à l'identifiant de contrôleur, la table de flux créée ayant le second identifiant.

4. Procédé selon la revendication 1, dans lequel le message de création d'entrée de flux transporte en outre un identifiant de contrôleur, et l'obtention, selon la correspondance, du second identifiant correspondant au premier identifiant, consiste en particulier à :
localiser le premier identifiant correspondant selon l'identifiant de contrôleur dans le message de création d'entrée de flux ; et
obtenir, selon la correspondance, le second identifiant correspondant au premier identifiant.

5. Procédé selon la revendication 1, dans lequel la règle d'identification de paquet comprend une correspondance entre une information caractéristique de paquet de données et une table de flux ; et l'information caractéristique de paquet de données comprend un ou plusieurs éléments parmi un réseau local virtuel (VLAN), un segment d'adresse IP, un port et un champ d'un décalage fixe dans un paquet de données.

6. Procédé selon la revendication 1 ou 5, consistant en outre, avant de réaliser une correspondance pour le paquet de données en utilisant une règle prédéfinie d'identification de paquet, à : recevoir la règle d'identification de paquet du gestionnaire de ressources.

7. Dispositif de transfert, comprenant :
un premier port (410), conçu pour être connecté à un gestionnaire de ressources et conçu pour recevoir un message de création de dispositif virtuel en provenance du gestionnaire de ressources, le message de création de dispositif virtuel transportant un identifiant de contrôleur et une information de ressource sur une ressource affectée ;
un premier processeur (420), connecté au premier port, et conçu pour créer, sur le dispositif de transfert selon l'information de ressource, un dispositif virtuel pour un contrôleur identifié dans le message de création de dispositif virtuel ;
un second port (430), conçu pour : être connecté à de multiples contrôleurs, et recevoir un message de création de table de flux en provenance du contrôleur ;
un second processeur (440), connecté au second port, et conçu pour : créer une table de flux dans le dispositif virtuel correspondant selon le message de création de table de flux en provenance du contrôleur, et stocker, dans une mémoire, une correspondance entre un premier identifiant d'une table de flux à créer qui est transporté dans le message de création de table de flux et un second identifiant de la table de flux qui est créé sur le dispositif de transfert selon le message de création de table de flux, le second identifiant étant utilisé pour identifier de manière unique la table de flux créée sur le dispositif de transfert ; recevoir un message de création d'entrée de flux en provenance du contrôleur, le message de création d'entrée de flux transportant une entrée de flux à créer et le premier identifiant de la table de flux qui doit stocker l'entrée de flux ; et obtenir, selon la correspondance, le second identifiant correspondant au premier identifiant, et stocker l'entrée de flux dans la table de flux correspondant au second identifiant obtenu ; et
un processeur de données (450), conçu pour : recevoir un paquet de données, réaliser une correspondance pour le paquet de données en utilisant une règle d'identification de paquet stockée dans la mémoire afin d'obtenir le premier identifiant de la table de flux pour traiter le paquet de données, obtenir, à partir de la correspondance, le second identifiant correspondant au premier identifiant, et traiter le paquet de données selon l'entrée de flux dans la table de flux correspondant au second identifiant.

8. Dispositif de transfert selon la revendication 7, dans lequel le premier port (410) est en outre conçu pour : recevoir la règle d'identification de paquet du gestionnaire de ressources, et stocker la règle d'identification de paquet reçue dans la mémoire.

9. Système de traitement de paquets, comprenant : un gestionnaire de ressources (530), de multiples contrôleurs (520) et un dispositif de transfert (510), le dispositif de transfert étant connecté séparément au gestionnaire de ressources et aux multiples contrôleurs ;
le gestionnaire de ressources (530) étant conçu pour envoyer un message de création de dispositif virtuel et donner l'instruction au dispositif de transfert de créer séparément un dispositif virtuel correspondant sur le dispositif de transfert pour chaque contrôleur identifié dans le message de création de dispositif virtuel ; le message de création de dispositif virtuel transportant un identifiant de contrôleur et une information de ressource sur une ressource affectée, et
le dispositif de transfert (510) étant conçu pour: créer une table de flux dans le dispositif virtuel correspondant selon un message de création de table de flux en provenance du contrôleur ; stocker une correspondance entre un premier identifiant d'une table de flux à créer qui est transporté dans le message de création de table de flux et un second identifiant de la table de flux qui est créé sur le dispositif de transfert selon le message de création de table de flux, le second identifiant étant utilisé pour identifier de manière unique la table de flux créée sur le dispositif de transfert ; recevoir un message de création d'entrée de flux en provenance du contrôleur (520), le message de création d'entrée de flux transportant une entrée de flux à créer et le premier identifiant de la table de flux qui doit stocker l'entrée de flux ; obtenir, selon la correspondance, le second identifiant correspondant au premier identifiant, et stocker l'entrée de flux dans la table de flux correspondant au second identifiant obtenu ; et recevoir un paquet de données, réaliser une correspondance pour le paquet de données en utilisant une règle prédéfinie d'identification de paquet afin d'obtenir le premier identifiant de la table de flux pour traiter le paquet de données, obtenir, à partir de la correspondance, le second identifiant correspondant au premier identifiant, et traiter le paquet de données selon l'entrée de flux dans la table de flux correspondant au second identifiant.

10. Système selon la revendication 9, dans lequel le contrôleur (520) est en outre conçu pour envoyer un message de demande d'affectation de ressource au gestionnaire de ressources, et le gestionnaire de ressources est conçu pour envoyer une information de ressource sur une ressource affectée au dispositif de transfert selon le message de demande d'affectation de ressource.

11. Système selon la revendication 10, dans lequel l'information de ressource comprend un ou plusieurs éléments parmi une bande passante de transfert, un espace de mémoire occupé par une table de flux, une utilisation de CPU, une taille de mémoire tampon de paquets et un nombre de files d'attente.
